# EUROPEAN PATENT APPLICATION

(11) **EP 2 889 806 A2**
(43) Date of publication of application: **01.07.2015**
(21) Application number: 14198105.0
(22) Date of filing: 16.12.2014
(51) Int. Cl.: G06K 9/00, G06K 9/20

(54) **Image processing device, image processing system, mobile object control apparatus, image recognition method, and carrier means**

(30) Priority: 27.12.2013 JP 2013273083
(71) Applicant: Ricoh Company, Ltd., Tokyo 143-8555 (JP)
(72) Inventor: Kasahara, Ryosuke, Tokyo, 143-8555 (JP)
(74) Representative: Schwabe - Sandmair - Marx

(57) **Abstract**

An image processing device (20, 30) and carrier means are provided, The image processing device (20, 30) recognizes an object in a specified imaging area, and includes a first feature obtaining unit (31) configured to obtain a feature from a polarized image obtained by capturing the imaging area based on a difference in polarization data between local areas of an area indicating the shape of an object to be recognized, and an object recognition unit (32, 34, 35) configured to recognize the object to be recognized using the feature obtained by the first feature obtaining unit (31). The carrier means carries computer readable code for controlling a computer system (200) to carry out the method performed by the image processing device (20, 30).

## Description

### BACKGROUND

### Technical Field

Example embodiments of the present invention generally relate to an image processing device, image processing system, mobile object control apparatus, image recognition method, and carrier means.

### Background Art

JP-2011-150687-A discloses a three-dimensional object recognition device capable of recognizing an object. Such object recognition is achieved as follows. An area-division polarizing filter is disposed over an imaging element of a camera device to change the polarization directions of the light (P-polarized light and S-polarized light), which are obtained for each pixel. Accordingly, a P-polarized image having the P-polarized component data corresponding to the intensity of the P-polarized component as polarized component data, and an S-polarized image having the S-polarized component data corresponding to the intensity of the S-polarized component as polarized component data are obtained. Then, the polarization data such as sub-degree of polarization (SDOP) is obtained from these polarized images.

More specifically, for example, the sub-degree of polarization at a portion of asphalt road is set as a reference sub-degree of polarization and a difference between a sub-degree of polarization of an area to be recognized and a reference sub-degree of polarization is referred to as relative sub-degree of polarization, and areas having the relative sub-degree of polarization equal to or greater than a threshold are extracted as a road element region (e.g., manhole cover). Even if the calculated values of the sub-degree of polarization of an area to be recognized vary due to the varying capturing conditions (e.g., different times of day such as daytime and nighttime, and different weather such as fine weather and rainy weather), an erroneous detection due to such a variation is prevented by using a relative amount from the reference sub-degree of polarization that varies for the same reason, instead of using an absolute amount of the sub-degree of polarization.

Then, an approximate curve is obtained using the edge data of the extracted road element region and the prepared data of shape template of road elements, and whether or not the shapes are close to each other is determined by using the least-squares method, the Hough transform, or a model equation. By so doing, road elements are recognized.

However, the above three-dimensional object recognition device extracts edges of an object to be recognized based on the differences in polarization data inside and outside of an area to be recognized. For this reason, depending on the selected position outside of the object to be recognized (the reference sub-degree of polarization), the difference values of the polarization data fluctuate widely according to the dependency of polarization on the light source direction, i.e., the variations in light source direction with reference to a camera). This leads to frequent erroneous detection.

### SUMMARY

Embodiments of the present invention described herein provide an image processing device and carrier means. The image processing device recognizes an object in a specified imaging area, and includes a first feature obtaining unit configured to obtain a feature from a polarized image obtained by capturing the imaging area based on a difference in polarization data between local areas of an area indicating the shape of an object to be recognized, and an object recognition unit configured to recognize the object to be recognized using the feature obtained by the first feature obtaining unit. The carrier means carries computer readable code for controlling a computer system to carry out the method performed by the image processing device.

According to one aspect of the present invention, the performance of recognition in the object recognition processes is improved where the polarized images obtained by an imaging device are used.

### BRIEF DESCRIPTION OF THE SEVERAL VIEWS OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a block diagram illustrating an outline of the configuration of a mobile object control apparatus including an image processing device according to an example embodiment of the present invention.
FIG. 2 is a block diagram of a computer system according to the present example embodiment, which is the hardware realizing a brightness-polarized image generation unit, an image recognition unit, and a vehicle controller each illustrated in FIG. 1.
FIG. 3 is a front view of an optical filter provided for the imaging device illustrated in FIG. 1, according to an example embodiment of the present invention.
FIG. 4 is a sectional view of an optical filter, an imaging element, and a substrate provided for the imaging device illustrated in FIG. 1, according to an example embodiment of the present invention.
FIG. 5 illustrates a model of reflection on an object, according to an example embodiment of the present invention.
FIG. 6A illustrates an average brightness image of a large number of people, according to an example embodiment of the present invention.
FIG. 6B illustrates an output of a Sobel filter of an average brightness image of a large number of people, according to an example embodiment of the present invention.
FIG. 7 is a diagram indicating values of brightness on the brightness image of FIG. 6A, according to an example embodiment of the present invention.
FIG. 8 is a diagram indicating values of intensity of polarization data on a polarized image of an average brightness image of a large number of people, according to an example embodiment of the present invention.
FIG. 9 is a functional block diagram of an image recognition unit illustrated in FIG. 1, according to a first example embodiment of the present invention.
FIGS. 10A to 10E illustrate an example of the polarization-data feature calculation unit of FIG. 9, according to an example embodiment of the present invention.
FIG. 11 is a functional block diagram of an image recognition unit illustrated in FIG. 1, according to a second example embodiment of the present invention.
FIG. 12 is a functional block diagram of an image recognition unit illustrated in FIG. 1, according to a third example embodiment of the present invention.
FIG. 13 is a graph illustrating an effect of an image recognition unit according to a first example embodiment of the present invention and an image recognition unit according to a second example embodiment of the present invention.
FIGS. 14A and 14B illustrate the results of recognition performed with a brightness image only, and the results of recognition performed with a brightness image and a polarized image according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits (ASICs), field programmable gate arrays (FPGAs) computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Example embodiments of the present invention will be described below with reference to the drawings.

### <Outline of Mobile Object Control Apparatus>

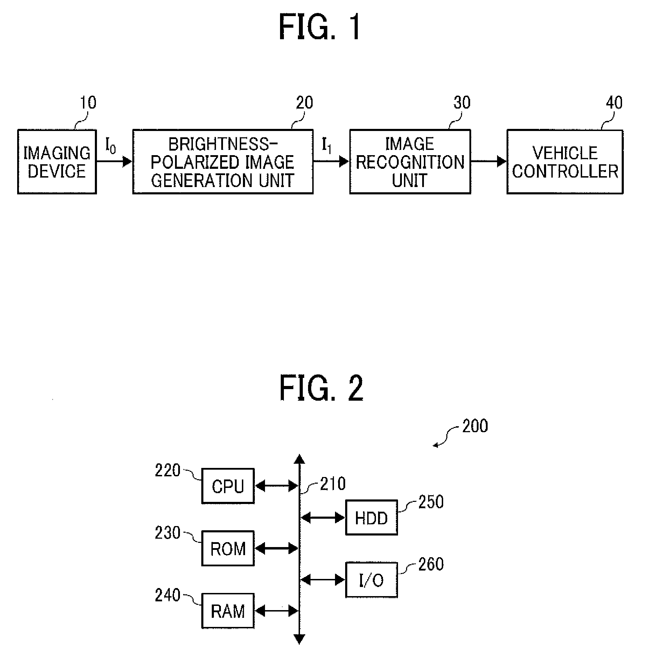

FIG. 1 is a block diagram illustrating an outline of the configuration of a mobile object control apparatus including an image processing device according to an example embodiment of the present invention.

The mobile object control apparatus includes an imaging device 10, a brightness-polarized image generation unit 20, an image recognition unit 30, and a vehicle controller 40. In the present example embodiment, the brightness-polarized image generation unit 20 and the image recognition unit 30 together configure an image processing device. Moreover, the image processing device and the imaging device 10 together configure an image processing system, and the image processing device and the vehicle controller 40 together configure a mobile object control apparatus.

The mobile object control apparatus is installed in a mobile object such as a vehicle, and when a human figure or another vehicle is detected in an imaging area ahead of the windscreen, the mobile object control apparatus reduces speed or stops the vehicle. Note that the mobile object control apparatus according to the present example embodiment may be applied to mobile objects other than vehicles. For example, the mobile object control apparatus according to the present example embodiment may be used to control robots.

The imaging device 10 includes an imaging lens, an imaging element, and an optical filter, and serves as a polarizing camera that captures polarized images. More specifically, the imaging device 10 forms an image of the incident light from an imaging area ahead of the windscreen on the imaging element, and converts the formed image into an electrical signal. Accordingly, an image I₀ of the imaging area is obtained. Here, the image I₀ consists of P-polarized images that include P-polarized component data for each pixel, and S-polarized images that include S-polarized component data for each pixel. A method for obtaining such P-polarized images and S-polarized images is described later in detail.

The image I₀ is input to the brightness-polarized image generation unit 20. The brightness-polarized image generation unit 20 generates a brightness image and a polarization image including polarization data such as sub-degree of polarization (SDOP) from the image I₀, and outputs an image I₁ composed of these brightness image and polarized image.

The image I₁ is input to the image recognition unit 30. The image recognition unit 30 detects an object (i.e., human figure or vehicle) using one of or both the brightness image and the polarized image of the image I₁. The image recognition unit 30 is described later in detail.

The results of the recognition by the image recognition unit 30 are input to the vehicle controller 40 that serves as a mobile object controller. The vehicle controller 40 controls the vehicle by applying a brake to the vehicle or assisting the steering based on the input results of the recognition.

### <Hardware Configuration of Image Processing Device and Vehicle Controller>

FIG. 2 is a block diagram of a computer system according to the present example embodiment, which is the hardware realizing the brightness-polarized image generation unit 20, the image recognition unit 30, and the vehicle controller 40 each illustrated in FIG. 1.

The computer system 200 includes a central processing unit (CPU) 220 that performs several kinds of controlling processes and other processes, a read only memory (ROM) 230, a random access memory (RAM) 240, hard disk drive (HDD) 250, an input-output (I/O) 260, and a bus 210 to which these elements are connected. Note that the imaging device 10 is connected to the I/O 260.

The RAM 240 serves as a working area of the CPU 220. The ROM 230 (including rewritable memory) is used as a storage area of various control programs or fixed data such as tables and parameters.

A recording medium such as digital versatile disk (DVD)-ROM that stores the image processing programs that implement the brightness-polarized image generation unit 20, the image recognition unit 30, and the vehicle controller 40 is set to an optical drive, and the image processing programs are stored in the HDD 250. These image processing programs are executed as necessary upon being loaded onto the RAM 240. Images to be processed are input to the I/O 260 from the imaging device 10.

### <Obtaining P-polarized image and S-polarized image>

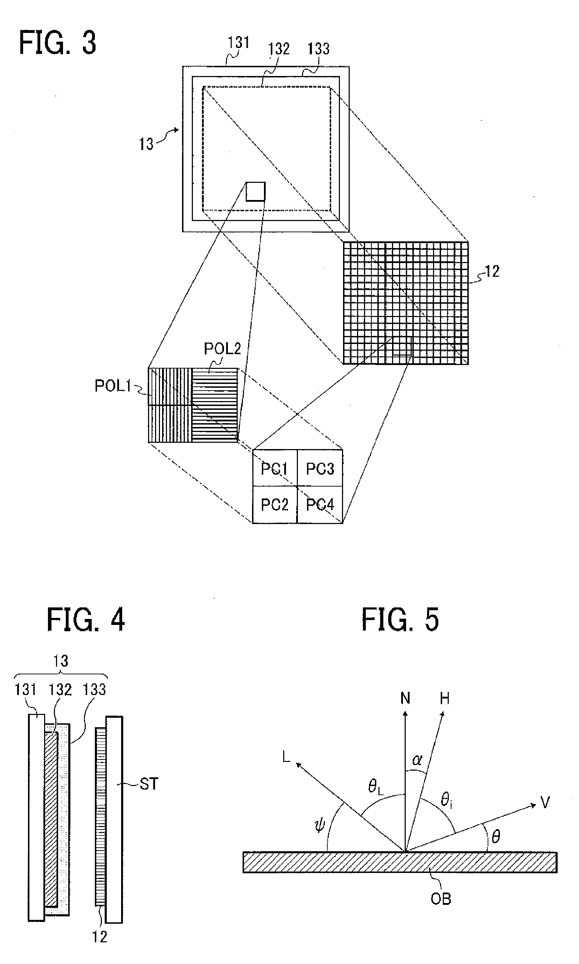

Next, a method for obtaining P-polarized images and S-polarized images using the imaging device 10 is described below in detail. FIG. 3 is a front view of an optical filter provided for the imaging device 10 illustrated in FIG. 1, according to the present example embodiment. FIG. 4 is a sectional view of an optical filter, an imaging element, and a substrate provided for the imaging device 10 illustrated in FIG. 1, according to the present example embodiment.

In the optical filter 13, a filter substrate 131 is a transparent substrate that transmits the incident light that has entered the optical filter 13 through an imaging lens. On the side of an imaging element 12 of the filter substrate 131, a polarizing-filter layer 132 is formed. Further, a packed bed 133 is formed so as to cover the polarizing-filter layer 132.

In the light that has entered the optical filter 13, the light that has passed through the polarizing-filter layer 132 enters the pixels of the imaging element 12 on a substrate ST. An area-division polarizing filter with sub-wavelength structure (SWS) is provided for the polarizing-filter layer 132 by a polarizer corresponding to the pixel size of the imaging element 12.

In the present example embodiment, rectangular S-polarized-component transmissive areas POL1 and P-polarized-component transmissive areas POL2 are alternately arranged in a lateral direction (i.e. row direction) as a polarizer. Accordingly, vertically-arranged pixels PC1 and PC2 of the imaging element 12 face the S-polarized-component transmissive area POL1, and vertically-arranged PC3 and PC4 placed next to the pixels PC1 and PC2 on the right side face the P-polarized-component transmissive area POL2.

For this reason, the output of the photoelectric conversion from the pixels PC1 and PC2 includes S-polarized component data, and does not include P-polarized component data. In a similar manner, the output of the photoelectric conversion from the pixels PC3 and PC4 includes P-polarized component data, and does not include S-polarized component data.

Accordingly, a mean value of the P-polarized component data of the two pixels on both sides, i.e., a mean value of the output of the photoelectric conversion from the two pixels PC3 and PC4 on the right side and the output of the photoelectric conversion from the two pixels on the left side of the pixels PC1 and PC2, is used as the P-polarized component data of the pixels PC1 and PC2. In a similar manner, a mean value of the S-polarized component data of the two pixels on both sides, i.e., a mean value of the output of the photoelectric conversion from the two pixels PC1 and PC2 on the left side and the output of the photoelectric conversion from the two pixels on the right side of the pixels PC3 and PC4, is used as the S-polarized component data of the pixels PC3 and PC4. Similar processes are applied to the other pixels.

By so doing, a P-polarized image and an S-polarized image are obtained for each pixel of the imaging element 12. The P-polarized image is the output of the photoelectric conversion including the P-polarized component data, and the S-polarized image is the output of the photoelectric conversion including the S-polarized component data.

In the present example embodiment, a differential polarized image is formed by the output of the photoelectric conversion from the pixels PC1 and PC2 not including the P-polarized component data and the output of the photoelectric conversion from the pixels PC3 and PC4 not including the S-polarized component data. Such a differential polarized image is used for various kinds of data detection as a parallax image.

In the present example embodiment, a monochrome sensor is assumed as an imaging element, but no limitation is indicated therein and a color sensor may be used. A different kind of device may be used as the imaging device 10. For example, various kinds of po lari zing cameras (e.g., a camera having a polarizer in front of the lens for capturing a plurality of images whose polarizing angles are different from each other) disposed in JP-2011-150687 may be used as the imaging device 10.

### <Obtaining Brightness Image and Polarization Data>

Next, the procedure for generating a brightness image and a polarization image including polarization data from the image I₀ by the brightness-polarized image generation unit 20 is described.

Firstly, a brightness image is obtained by "(S-polarized image+P-polarized image)/2" by which an average of the polarization data of an S-polarized image and the polarization data of a P-polarized image is calculated. In the procedure, a polarized image that includes SDOP as polarization data is obtained.

The SDOP is defined by the following Equation (1) with the Stokes parameters: So and S₁. $SDOP = {S}_{1} / {S}_{0} = \left\{I\left(0, φ\right)-I\left(90, φ\right)\right\} / \left\{I\left(0, φ\right)+I\left(90, φ\right)\right\}$

In Equation (20), I(0, ϕ) and I(90, ϕ) indicate the light intensity through a polarizer when the axial angle is zero degree and the light intensity through a polarizer when the axial angle is ninety degree, respectively.

In the "area-division polarizing filter" described above, I(0, ϕ) and I(90, ϕ) indicate the light-receptive intensity of a pixel that has received the transmission light through the S-polarized-component transmissive area POL1, and the light-receptive intensity of a pixel that has received the transmission light through the P-polarized-component transmissive area POL2.

Accordingly, the SDOP is calculated by the following equation. {(S-polarized image)-(P-polarized image)}/{(S-polarized image)+(P-polarized image)}={(S-polarized image)-(P-polarized image)}/(brightness image)

### <Polarization Features>

As described above, the image recognition unit 30 recognizes an object using polarization data such as SDOP. Here, the polarization data is greatly influenced by the light source, and thus if the physical value of the polarization data is used just as it is, it is difficult to describe the features of an object to be recognized. The polarization features and a method of describing the features of an object to be recognized by the image recognition unit 30 are described below.

The reflectance characteristics of the surface of object are expressed by bi-directional reflectance distribution function (BRDF). A "BRDF on certain point" of the surface of object is dependent on both the incident direction and reflection direction, and is defined as a ratio of the intensity of the light reflected towards a point of observation to the intensity of the incident light from the illumination direction.

Various types of reflection model of polarization have been proposed. In the following description, "Torrance-Sparrow model" is used for a specular-reflection component, and "Lambert model" is used for a diffuse reflection component.

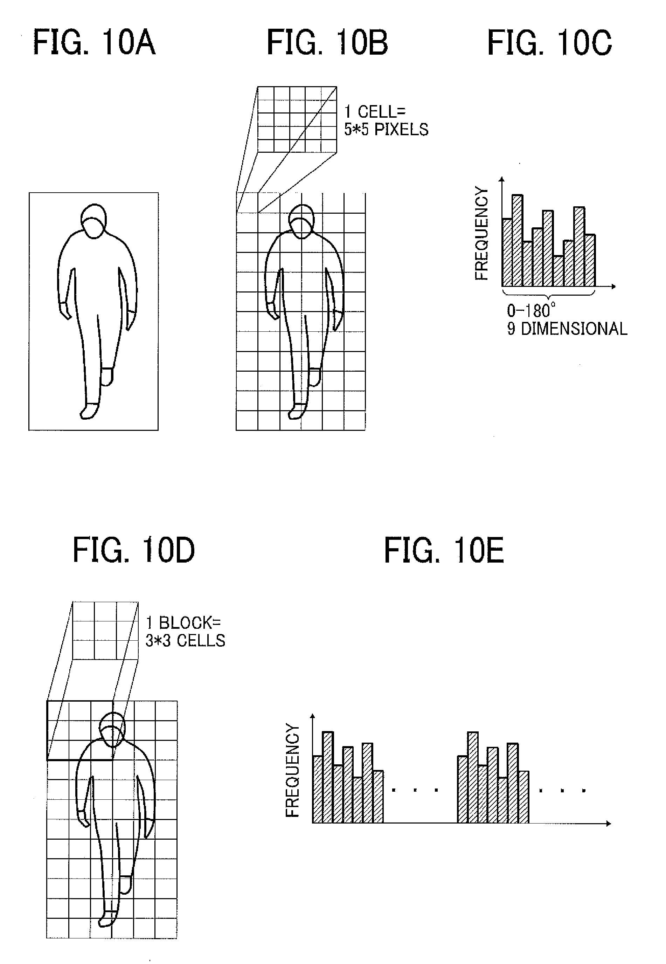

FIG. 5 illustrates a model of reflection on an object OB, according to the present example embodiment of the present invention. In FIG. 5, N indicates the "outward normal vector" at a reflection point on the object OB. L indicates the "light source vector" that is directed to the light source from the reflection point. V indicates the "line-of-vision vector" that is directed to the observation position from the reflection point. H indicates the "bisection vector" that bisects the angle which the light source vector L forms with the line-of-vision vector V. Note that the vectors: N, L, V, and H are coplanar. On this same plane, angles: ψ, θ_{L}, α, θᵢ, and θ are defined as follows as illustrated in FIG. 10.

"S-polarized light BRDF: ρ_{S}(ψ, θ)" by the object OB is defined by the following Equation (2), and "P-polarized light BRDF: ρ_{P}(ψ, θ) by the object OB is defined by the following Equation (3). ${ρ}_{S} \left(ψ, θ\right) = {k}_{S} ⁢ {R}_{S} \left({θ}_{i}\right) ⁢ D + {k}_{d} ⁢ {cosθ}_{L}$ ${ρ}_{P} \left(ψ, θ\right) = {k}_{P} ⁢ {R}_{P} \left({θ}_{i}\right) ⁢ D + {k}_{d} ⁢ {cosθ}_{L}$

Note that the first members of the right side of the Equations (2) and (3) are members of specular reflection model (Torrance-Sparrow model), and the second members of the right side of the Equations (2) and (3) are members of diffuse reflection model (Lambert model). The members ks, k_{P}, and k_{d} indicate a specular reflection coefficient of the S-polarized light, a specular reflection coefficient of the P-polarized light, and a diffuse reflection coefficient, respectively.

Moreover, R_{S}(θᵢ) and R_{P}(θᵢ) indicate the "Fresnel reflection formula" with reference to the S-polarized light and the P-polarized light, respectively. R_{S}(θᵢ) and R_{P}(θᵢ) are defined by the following Equations (4) and (5). ${R}_{S} \left({θ}_{i}\right) = {\left\{\left({n}_{1}⁢{cosθ}_{i}-{n}_{2}⁢{cosθ}_{i}⁢ʹ\right)/\left({n}_{1}⁢{cosθ}_{i}+{n}_{2}⁢{cosθ}_{i}⁢ʹ\right)\right\}}^{2}$ ${R}_{P} \left({θ}_{i}\right) = {\left\{\left({n}_{1}⁢{cosθ}_{i}⁢ʹ-{n}_{2}⁢{cosθ}_{i}\right)/\left({n}_{1}⁢{cosθ}_{i}⁢ʹ+{n}_{2}⁢{cosθ}_{i}\right)\right\}}^{2}$

In the equations (4) and (5), n₁ and n₂ indicate the reflective indexes of the air and the object OB, respectively.

The angle: θᵢ' has a relationship with the angle: θᵢ and the reflective indexes: n₁ and n₂ as in the following Equation (6). ${sinθ}_{i} ⁢ ʹ = \left({n}_{1}/{n}_{2}\right) ⁢ {sinθ}_{i}$

Accordingly, θᵢ' is defined as in the following Equation (7). ${θ}_{i} ⁢ ʹ = {sin}^{- 1} \left\{\left({n}_{1}/{n}_{2}\right)⁢{sinθ}_{i}\right\}$

By the members of the Fresnel reflection formula described above, polarization dependency is taken into consideration as a component of the reflection model.

The member D in the equations (2) and (3) indicates the "normal-line distribution member" of a minute area at the reflection point, and is defined by the following Equation (8). $D = exp \left(-{α}^{2}/2⁢{a}^{2}\right)$

In Equation (18), α indicates the central coordinate value of the distribution function, and corresponds to the angle parameter: α illustrated in FIG. 5. Moreover, "a" indicates a standard deviation in the distribution function. Note that "a" serves as a "parameter of angular distribution" on the minute area, and is not physically related to "surface roughness", which is a term used in the field of mechanical engineering (usually indicated by a standard deviation of the distribution of the height of the bumps and dips on the surface of an object). The normal-line distribution: D is a Gaussian distribution that has a normal distribution.

Next, the polarization data is described. Various kinds of polarization data may be used, but "degree of polarization", "sub-degree of polarization (SDOP)", and "polarization ratio" are described below as the polarization data.

The degree of polarization (DOP) is defined by known Stokes parameters: S₀, S₁, S₂, and S₃, which relate to the polarization. The DOP is defined by the following Equation (9) with the Stokes parameters: S₀, S₁, S₂, and S₃. $DOP = \left\{\sqrt{ }⁢\left({{S}_{1}}^{2}+{{S}_{2}}^{2}+{{S}_{3}}^{2}\right)\right\} / {S}_{0}$

As described above, the SDOP is defined by the following Equation (10) with the Stokes parameters: S₀ and S₁. $SDOP = {S}_{1} / {S}_{0} = \left\{I\left(0, φ\right)-I\left(90, φ\right)\right\} / \left\{I\left(0, φ\right)+I\left(90, φ\right)\right\} = \left\{{ρ}_{S}\left(ψ, θ\right)-{ρ}_{P}\left(ψ, θ\right)\right\} / \left\{{ρ}_{S}\left(ψ, θ\right)+ρ )\left(ψ, θ\right)\right\}$

When the Stokes parameters: S₂=S₃=0, the following Equation (11) holds true. $DOP = \left|SDOP\right|$

For this reason, the SDOP in this case is also referred to as "degree of polarization".

The polarization ratio is a ratio of I(0, ϕ) to I(90, ϕ), and is defined by the following Equation (12). $Polarization Ratio = I \left(0, φ\right) / I \left(90, φ\right)$

Because the polarization ratio is a ratio of I(0, ϕ) to I(90, ϕ) as described above, the polarization ratio may be defined by the following Equation (13) in place of Equation (12). $Polarization Ratio = I \left(90, φ\right) / I \left(0, φ\right)$

A method of retrieving useful data using the polarization data as described above is described below. In the reflection model described above with reference to FIG. 5, the polarization state of the reflection light may be expressed by variables of the material of the object OB (reflective index, state of surface, inner-dispersion coefficient), the angle which the light source forms with the object, and the angle which the object forms with the observation point. In other words, the polarization state may be expressed by the following Equation (14). $Polarization State = F ⁢ \left(Light-source State,Material,Angle\right)$

In Equation (14), F indicates a function.

In Equation (14), the variables are defined as follows. When any two of the light-source state, the material, and the angle are determined, the other one is determined accordingly. The sign "σ" indicates the graininess of a material, and servers in a similar manner to "a".
Light-source State=Angular Distribution of ψ
Material=k_{S}, k_{P}, k_{d}, n₂, σ
Angle=θ

In the reflection model described above with reference to FIG. 5, the members (Rs, Rp) that indicate "specular light of regular reflection" on the surface of the object OB characterize the polarization state. When the imaging device 10 and the light source form the same angle with the object OB to be observed, almost no specular light is reflected. As a result, "polarization data is not obtained".

There may be such difficulties when the light-source state is not controllable. For this reason, the following matters are to be considered if the application to vehicle-installed use where the conditions of the light source cannot be fixed are assumed.

Because the polarization state is defined as in Equation (14), in vehicle-installed cameras that do not project irradiation light, "the polarization data of a polarized image" varies depending on the light-source state. In other words, the polarization data (e.g., SDOP) varies depending on the light-source state when distinguishing "objects of different materials such as road surface and white lines". This causes difficulties in the application of polarized light. Although the polarization data also varies depending on the angle, the variations in polarization data due to the angle may be ignored when "objects on the road with the same angle" are to be observed.

When object recognition is performed, some sort of feature of an object is used. However, if only the polarization state of the object is used as a feature, the image recognition is influenced by the state of the light source. For this reason, it is desired that a feature consistent with the polarization state independent from the light-source state be used to perform image recognition.

According to the Equations (2) and (3), the intensity of reflection (rotatory power) of the S-polarized component and P-polarized component varies depending on the angle of the light (i.e., angle: ψ in FIG. 5 determined by angle: θ_{L}). However, the rotatory power of the P-polarized component is always greater than that of the S-polarized component. Moreover, the "difference in rotatory power" between the S-polarized component and the P-polarized component is greater as the surface reflection is greater (i.e., as the inner dispersion is smaller).

At a rough estimate, if an absolute amount as a degree of polarization is abandoned and only the relative amount is taken into consideration, whether the surface reflection on a certain part of an object material is large or small (i.e., whether the material has large dispersion or small dispersion) is determined regardless of the state of the light source. In other words, the SDOP varies greatly depending on the angle of the light source. However, when the relationship between materials A and B of a local area with a certain angle is A>B in size of polarization data, A>B holds true with other angles in many cases.

Cases in which the relationship between materials A and B with a certain angle is A>B in size of polarization data and A>B holds true with other angles as described above are analyzed as follows. As material parameters include ks, k_{P}, k_{d}, n₂, and σ, conditions for the value of the SDOP to vary in the same direction regardless of the angle when the parameters vary are derived.

If the SDOP is calculated in view of the Equations (2) to (5), (8), and (10), the following Equation (15) is derived. $SDOP = \frac{{k}_{s} ⁢ {\left(\frac{{n}_{1} ⁢ cos {θ}_{i} - {n}_{2} ⁢ cos {θ}_{i}^{ʹ}}{{n}_{1} ⁢ cos {θ}_{i} + {n}_{2} ⁢ cos {θ}_{i}^{ʹ}}\right)}^{2} ⁢ exp \left(\frac{- {α}^{2}}{2 ⁢ {σ}^{2}}\right) + {k}_{d} ⁢ cos {θ}_{L} - {k}_{s} ⁢ {\left(\frac{{n}_{1} ⁢ cos {θ}_{i}^{ʹ} - {n}_{2} ⁢ cos {θ}_{i}}{{n}_{1} ⁢ cos {θ}_{i}^{ʹ} + {n}_{2} ⁢ cos {θ}_{i}}\right)}^{2} ⁢ exp \left(\frac{- {α}^{2}}{2 ⁢ {α}^{2}}\right) + {k}_{d} ⁢ cos {θ}_{L}}{{k}_{s} ⁢ {\left(\frac{{n}_{1} ⁢ cos {θ}_{i} - {n}_{2} ⁢ cos {θ}_{i}^{ʹ}}{{n}_{1} ⁢ cos {θ}_{i} + {n}_{2} ⁢ cos {θ}_{i}^{ʹ}}\right)}^{2} ⁢ exp \left(\frac{- {α}^{2}}{2 ⁢ {σ}^{2}}\right) + {k}_{d} ⁢ cos {θ}_{L} + {k}_{s} ⁢ {\left(\frac{{n}_{1} ⁢ cos {θ}_{i}^{ʹ} - {n}_{2} ⁢ cos {θ}_{i}}{{n}_{1} ⁢ cos {θ}_{i}^{ʹ} + {n}_{2} ⁢ cos {θ}_{i}}\right)}^{2} ⁢ exp \left(\frac{- {α}^{2}}{2 ⁢ {α}^{2}}\right) + {k}_{d} ⁢ cos {θ}_{L}}$

Assuming that n₁=1 in view of the incidence light from the air, the Fresnel reflection light is expressed in the following Equations (16) and (17). ${R}_{S} \left({n}_{2}\right) = {\left\{\left({cosθ}_{i}-{n}_{2}⁢{cosθ}_{i}⁢ʹ\right)/\left({cosθ}_{i}+{n}_{2}⁢cosθʹ\right)\right\}}^{2}$ ${R}_{P} \left({n}_{2}\right) = {\left\{\left({cosθ}_{i}⁢ʹ-{n}_{2}⁢{cosθ}_{i}⁢ʹ\right)/\left({cosθ}_{i}⁢ʹ+{n}_{2}⁢{cosθ}_{i}⁢ʹ\right)\right\}}^{2}$

By organizing the Equation (15) in view of the Equations (16) and (17), the following Equation (18) is derived. $SDOP = \frac{{k}_{s} ⁢ exp \left(\frac{- {α}^{2}}{2 ⁢ {σ}^{2}}\right) ⁢ \left[{R}_{s}\left({n}_{2}\right)-{R}_{p}\left({n}_{2}\right)\right]}{{k}_{s} ⁢ exp \left(\frac{- {α}^{2}}{2 ⁢ {σ}^{2}}\right) ⁢ \left[{R}_{s}\left({n}_{2}\right)+{R}_{p}\left({n}_{2}\right)\right] + 2 ⁢ {k}_{d} ⁢ cos {θ}_{L}}$

The Equation (18) is a theoretical equation of SDOP according to the model according to the present example embodiment. By substituting "k=(k_{S}/k_{d})" into the Equation (18) as a parameter that indicates the ratio of the specular-reflection component to the diffusion component, the Formula (18) is organized as in the following Formula (19). $SDOP = \frac{k ⁢ exp \left(\frac{- {α}^{2}}{2 ⁢ {σ}^{2}}\right) ⁢ \left[{R}_{s}\left({n}_{2}\right)-{R}_{p}\left({n}_{2}\right)\right]}{k ⁢ exp \left(\frac{- {α}^{2}}{2 ⁢ {σ}^{2}}\right) ⁢ \left[{R}_{s}\left({n}_{2}\right)+{R}_{p}\left({n}_{2}\right)\right] + 2 ⁢ cos {θ}_{L}}$

Next, the right side of the Equation (19) is differentiated with respect to material parameters k, n₂, and σ, and the variations that are not influenced by the angle θᵢ or θ_{L} are analyzed as follows.

Firstly, as expressed in the following Equation (20), the right side of the Equation (19) is differentiated with respect to k. $\frac{\partial }{\partial k} ⁢ SDOP = \frac{\partial }{\partial k} ⁢ \left[\frac{k ⁢ exp \left(\frac{- {α}^{2}}{2 ⁢ {σ}^{2}}\right) ⁢ \left[{R}_{s}\left({n}_{2}\right)-{R}_{p}\left({n}_{2}\right)\right]}{exp \left(\frac{- {α}^{2}}{2 ⁢ {σ}^{2}}\right) ⁢ \left[{R}_{s}\left({n}_{2}\right)+{R}_{p}\left({n}_{2}\right)\right] + 2 ⁢ cos {θ}_{L}}\right]$

The partial differentiation sign in the Equation (20) may be referred to as "∂/∂k" in the following description. Moreover, the function to be partially differentiated may be referred to by a different character in a similar manner.

In order to organize the complicated equation, the functions f, g, and h are defined as in the following Equations (21), (22), and (23), and these functions f, g, and h are substituted into the Equation (20). Accordingly, the Equation (24) is derived. $f = exp \left(-{α}^{2}/2⁢{σ}^{2}\right) \left\{{R}_{S}\left({n}_{2}\right)-{R}_{p}\left({n}_{2}\right)\right\}$ $g = 2 ⁢ {cosθ}_{L}$ $h = exp \left(-{α}^{2}/2⁢{σ}^{2}\right) \left\{{R}_{S}\left({n}_{2}\right)+{R}_{p}\left({n}_{2}\right)\right\}$ $\frac{\partial }{\partial k} ⁢ SDOP = \frac{h}{f} ⁢ \left[\frac{\frac{g}{f}}{{\left(\frac{g}{f}+k\right)}^{2}}\right]$

Because "-π/2≤θ_{L}≤π/2", the functions f, g, and h always take a positive value. Accordingly, *"*(∂/∂ k)(SDOP)≥0", and when k is varied regardless of the angle, the value of the SDOP varies in a specific direction.

Next, the right side of the Equation (19) is differentiated with reference to σ as expressed in the following Equation (25). $\frac{\partial }{\partial σ} ⁢ SDOP = \frac{\partial }{\partial σ} ⁢ \left[\frac{k ⁢ exp \left(\frac{- {α}^{2}}{2 ⁢ {σ}^{2}}\right) ⁢ \left[{R}_{s}\left({n}_{2}\right)-{R}_{p}\left({n}_{2}\right)\right]}{k ⁢ exp \left(\frac{- {α}^{2}}{2 ⁢ {σ}^{2}}\right) ⁢ \left[{R}_{s}\left({n}_{2}\right)+{R}_{p}\left({n}_{2}\right)\right] + 2 ⁢ cos {θ}_{L}}\right]$

In order to organize the complicated equation, the functions f, g, and h are defined as in the following Equations (26), (27), and (28). By substituting these functions f, g, and h into the Equation (25), the Equation (29) is derived as below. $f = k \left\{Rs\left({n}_{2}\right)-{R}_{p}\left({n}_{2}\right)\right\}$ $g = k \left\{Rs\left({n}_{2}\right)-{R}_{p}\left({n}_{2}\right)\right\}$ $h = 2 ⁢ {cosθ}_{L}$ $\frac{\partial }{\partial σ} ⁢ SDOP = \frac{f}{g} ⁢ \left[\frac{\frac{h}{g} ⁢ {α}^{2} ⁢ exp \left(\frac{- {α}^{2}}{2 ⁢ {σ}^{2}}\right)}{{σ}^{3} ⁢ {\left(exp\left(\frac{- {α}^{2}}{2 ⁢ {σ}^{2}}\right)+\frac{h}{g}\right)}^{2}}\right]$

In view of the fact that the functions f, g, and h and each of the members of the Equation (29) always take a positive value and, "(*∂*/*∂* k)(SDOP)≥0". Accordingly, when σ is varied regardless of the angle, the value of the SDOP varies in a specific direction.

Next, the right side of the Equation (19) is differentiated with reference to n₂ as expressed in the following Equation (30). $\frac{\partial }{\partial {n}_{2}} ⁢ SDOP = \frac{\partial }{\partial {n}_{2}} ⁢ \left[\frac{k ⁢ exp \left(\frac{- {α}^{2}}{2 ⁢ {σ}^{2}}\right) ⁢ \left[{R}_{s}\left({n}_{2}\right)-{R}_{p}\left({n}_{2}\right)\right]}{k ⁢ exp \left(\frac{- {α}^{2}}{2 ⁢ {σ}^{2}}\right) ⁢ \left[{R}_{s}\left({n}_{2}\right)+{R}_{p}\left({n}_{2}\right)\right] + 2 ⁢ cos {θ}_{L}}\right]$

In order to organize the complicated equation, the functions f and g are defined as in the following Equations (31) and (32) and these functions f and g are substituted into the Equation (30). Accordingly, the Equation (33) is derived as follows. $f = kexp ⁢ \left(-{α}^{2}/2⁢{σ}^{2}\right)$ $g = 2 ⁢ {cosθ}_{L}$ $\frac{\partial }{\partial {n}_{2}} ⁢ SDOP = \frac{\left(\frac{g}{f}+2⁢{R}_{p}\left({n}_{2}\right)\right) ⁢ \frac{\partial }{\partial {n}_{2}} ⁢ {R}_{s} \left({n}_{2}\right) - \left(\frac{g}{f}+2⁢{R}_{s}\left({n}_{2}\right)\right) ⁢ \frac{\partial }{\partial {n}_{2}} ⁢ {R}_{p} \left({n}_{2}\right)}{{R}_{s} \left({n}_{2}\right) + {R}_{p} \left({n}_{2}\right) + \frac{g}{f}}$

Assuming that "(g/f)>>2Rₚ(n₂)" and "(g/f)>>2R_{S}(n₂)", the numerator of the Equation (33) becomes the following Equation (34). $\left(g/f\right) ⁢ \left(\partial /\partial {n}_{2}\right) ⁢ {R}_{S} \left({n}_{2}\right) - \left(g/f\right) ⁢ \left(\partial /\partial {n}_{2}\right) ⁢ {R}_{P} \left({n}_{2}\right)$

As it is assumed that "(g/f)(*∂*/*∂*n₂)R_{S}(n₂)>(g/f)(∂/∂n₂)R_{P}(n₂)", "(g/f)>>2Rₚ(n₂)". Moreover, when the condition "(g/f)>>2R_{S}(n₂)" is met, "(∂/∂ n₂)≥0". Accordingly, when n₂ is varied, the value of the SDOP varies in a specific direction regardless of the angle.

In Equation (34), f and g described above have a relationship with each other as in the following Equation (35). $\left(g/f\right) = 2 ⁢ cosθ / \left\{kexp⁢\left(-{α}^{2}/2⁢{σ}^{2}\right)\right\} = 2 ⁢ {k}_{d} ⁢ cosθ / \left\{{k}_{S}⁢exp\left({α}^{2}/2⁢{σ}^{2}\right)\right\}$

The numerator of the right side of the Equation (35) indicates the diffuse reflection component, and the denominator indicates the specular component (including the distribution of microfacets). In view of the fact that R_{P}(n₂)≤1 and R_{S}(n₂)≤1, when the amount of the diffusion component is equal to or greater than a specified amount with reference to the specular component, the approximation condition is met. When "(∂/∂ n₂)≥0" and n₂ is varied, the value of the SDOP varies in a specific direction regardless of the angle.

When the amount of the diffusion component is equal to or greater than a specified amount with reference to the specular component and the relationship between materials A and B with the specified angle of the light source is A>B in size of polarization data in the analysis described above, A>B holds true with other angles. Generally, the diffusion component of an object is greater than the specular component except mirror-like objects. Accordingly, most objects satisfy the above condition.

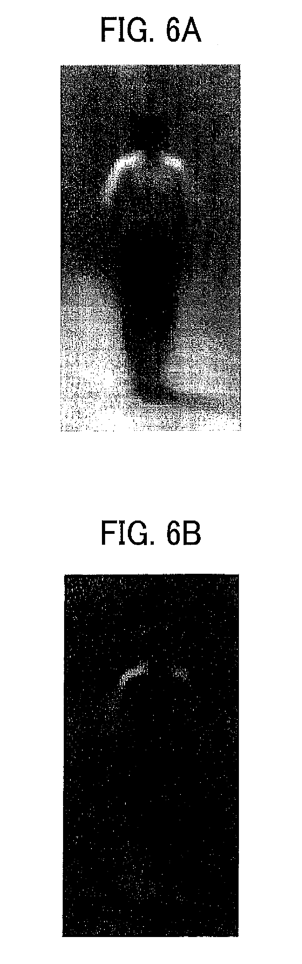

Next, the above description is verified with reference to actual images. FIGS. 6A and 6B each illustrate an average brightness image of the images of nine-hundred sixty-two people with various angles of lighting, according to the present example embodiment. FIG. 6A illustrates a brightness image (raw image), and FIG. 6B illustrates an average brightness image obtained performing edge extraction and averaging on the brightness image processed by the Sobel filter. In these two images in FIGS. 6A and 6B, the silhouette pictures of human figure are recognized. In particular, the features in a region of shoulders to hands are significant in the image processed by the Sobel filter.

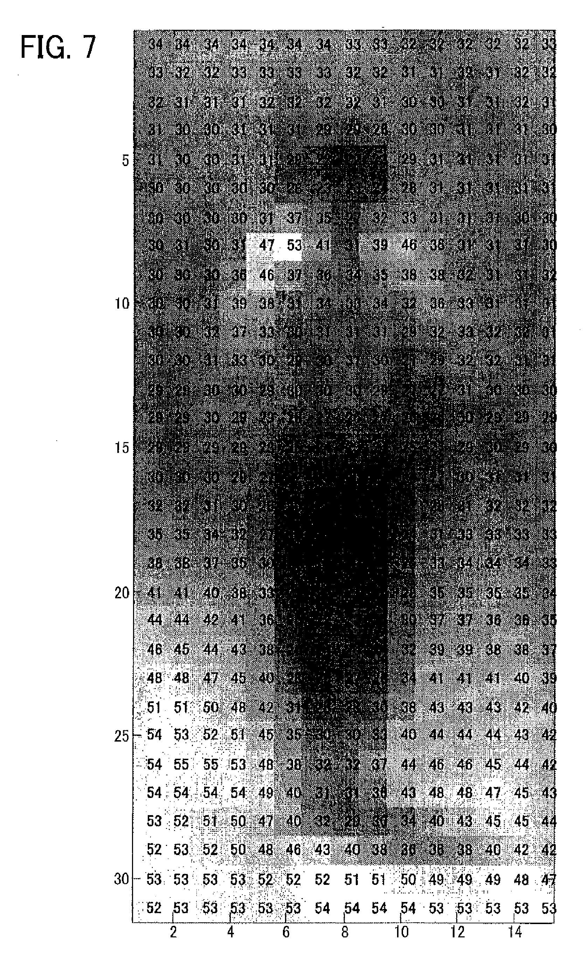

FIG. 7 is a diagram indicating values of brightness on the brightness image of FIG. 6A whose resolution is reduced to one fourth, according to the present example embodiment. In FIG. 7, the values given at the bottom end in the horizontal direction and the values given at the left end in the vertical direction indicate the values of x-coordinate and y-coordinate of the xy-rectangular coordinates where the top-left end of the brightness image is the point of origin. The values on the image indicates brightness values. As illustrated in FIG. 7, the area around a shoulder ((x, y)=(6, 8), (5, 8), (10, 8)) indicates high brightness (brightness values: 53, 47, 46).

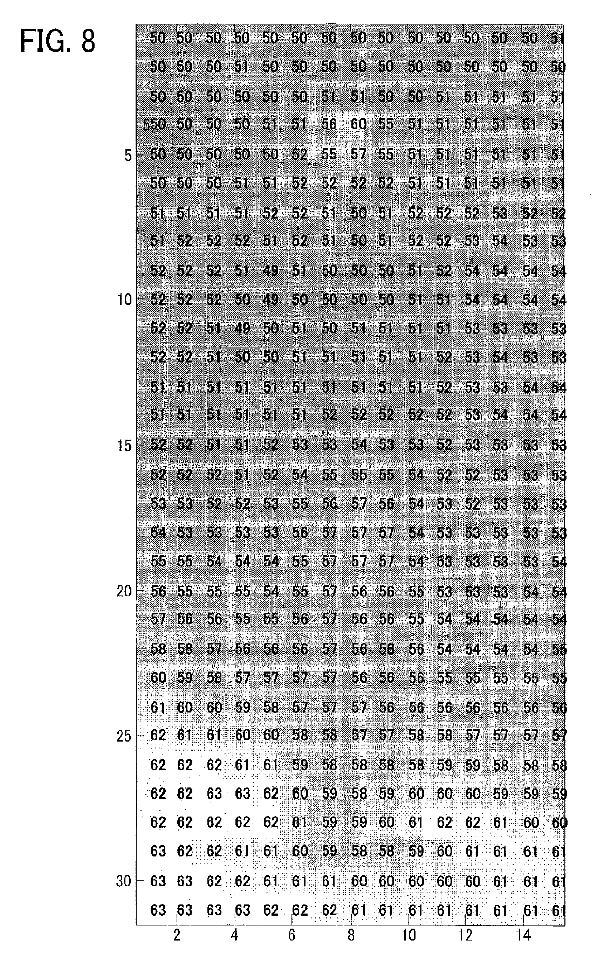

FIG. 8 is a diagram indicating values of intensity of polarization data (SDOP) on a polarized image (raw image) of an average brightness image of the images of nine-hundred sixty-two people with various angles of lighting, where the resolution of the polarized image is reduced to one fourth, according to the present example embodiment.

A polarized image has large intensity values in its entirety compared with the brightness values of a brightness image, and the contrast is small. Accordingly, the polarized image that corresponds to the brightness image of FIG. 6A becomes roughly white, and the average polarized image that corresponds to the average brightness image of FIG. 6B becomes roughly black. In FIG. 8, the area of head around (x, y)=(8, 4) indicates a feature. This is because the optical characteristics of the materials of hair are different from the other parts such as clothes and such differences are expressed as polarization data.

In other words, the polarized image of FIG. 8 indicates an average image of people with various angles of lighting, and an area of head appears white compared with the other parts in the polarized image. This indicates that an area of head has a greater degree of SDOP compared with other parts of human figure.

As described above, when the relationship between materials A and B of a local area with a certain angle is A>B in size of polarization data regardless of the state of the light source, A>B holds true with other angles of the light source in many cases. As areas with brightness features are different from areas with polarization features, the brightness image and the polarized image are complementary to each other. Accordingly, the performance of detection increases.

For this reason, for example, if the image of human figure as described above is used as an image to be learned for human-figure detection and a difference between the areas of clothes (e.g., area of chest) and the area of head on a polarized image is used as one dimension of feature, it becomes possible to detect a human figure regardless of the state of the light source. Accordingly, advantageous effects are achieved when a feature that is based on differences between local areas of an area indicating the shape of an object to be recognized is used.

Moreover, for example, if the polarized image of the average image of the images of a large number of vehicles captured from backward is used as an image to be learned for vehicle detection and a difference between the areas of rear window and the area of rear body on a polarized image is used as one dimension of feature, it becomes possible to detect a vehicle regardless of the state of the light source. In particular, the windows of a vehicle involves specular reflection and greatly affects the polarization state. Accordingly, the accuracy of vehicle detection is significantly improved by using polarization data as described above according to the present example embodiment of the present invention.

Next, an image recognition unit that is proposed in view of the analysis described above is described.

### <First Example Embodiment of Image Recognition Unit>

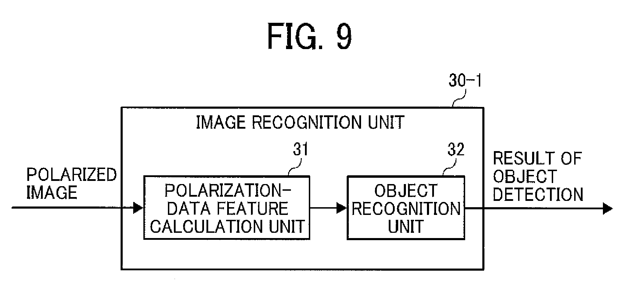

FIG. 9 is a functional block diagram of the image recognition unit 30 illustrated in FIG. 1, according to the first example embodiment. An image recognition unit 30-1 includes a polarization-data feature calculation unit 31 that serves as a first feature obtaining unit and an object recognition unit 32.

The polarization-data feature calculation unit 31 obtains a feature from the input polarized image based on differences in polarization data between local areas of an area indicating the shape of an object to be recognized. The object recognition unit 32 receives the polarization-data feature from the polarization-data feature calculation unit 31, and uses known methods such as a support vector machine (SVM) model and adaptive boosting (AdaBoost) algorithms to detect an object. Then, the object recognition unit 32 outputs a result of the object detection.

The polarization-data feature calculation unit 31 uses the feature, which is retrieved based on differences between local areas of an area indicating the shape of an object to be recognized, for the polarization data (i.e., degree of polarization, sub-degree of polarization, or polarization ratio). Differences in a local area include Haar-like features, pixel difference features, histogram of oriented gradient (HOG) features, and edge orientation histogram (EOH) features (see Yamashita, T., and Fujiyoshi, H. (2008). Efficient Features for Object Recognition. Retrieved December 13, 2013, from Chubu University, Department of Robotics Science and Technology Web site: http://www.vision.cs.chubu.ac.jp/04/pdf/TS03.pdf).

In the case of the EOH features, edges images are firstly generated by using the Sobel filter, and the edge intensity and the edge direction are calculated based on the generated edge images. For this reason, the data of the differences between adjacent local areas of an area indicating the shape of an object to be recognized is obtained by extracting edges using the Sobel filter, and a feature is obtained from the obtained data of the differences.

In the case of the HOG features, edges are firstly extracted in the x-direction and the y-direction, and the edge intensity is calculated for each edge direction based on the extracted edges. For this reason, the data of the differences between adjacent local areas of an area indicating the shape of an object to be recognized is obtained by extracting edges in the x-direction and the y-direction, and a feature is obtained from the obtained data of the differences.

In the case of the Haar-like features, a feature is similarly obtained from the data of the differences between adjacent local areas of an area indicating the shape of an object to be recognized. In the case of the pixel difference features, a feature is obtained from the data of the differences between not only adjacent but also discrete local areas of an area indicating the shape of an object to be recognized.

Note that it is known to use such features as described above for a brightness image (see Yamashita, T., and Fujiyoshi, H. (2008) and Yamasaki, T. (2010). Histogram of Oriented Gradients (HoG), (Writing State-of-the-Art Image/Video Processing Algorithms within 100 Lines), The Institute of Image Information and Television Engineers, Journal Vol. 64(3), pp. 322-324). However, in the present example embodiment, a method of using such features for polarization data is proposed based on the analysis described above.

FIGS. 10A to 10E illustrate an example of the polarization-data feature calculation unit 31, according to the present example embodiment. The procedure for calculating the HOG features from a polarized image is described below.

FIG. 10A illustrates an input polarized image, according to the present example embodiment. A line drawing of a human figure is illustrated in FIG. 10A, but the actually input polarized image is a gray-scale image as illustrated in FIG. 8. The input image in FIGS. 10A, 10B, and 10D is composed of "30*60 (horizontal direction/vertical direction)" pixels.

The polarization-data feature calculation unit 31 calculates the gradient intensity m(u, v) and gradient direction Θ(u, v) for each pixel in the horizontal direction and the vertical direction by using the following Equations (36) to (39). In the Equations (36) to (39), I indicates the input polarized image, and (u, v) indicate the position of a pixel in the horizontal direction (x-direction) and the position of the pixel in the vertical direction (y-direction). ${f}_{u} \left(u, v\right) = I ⁢ \left(u+1,v\right) - I ⁢ \left(u-1,v\right)$ ${f}_{v} \left(u, v\right) = I ⁢ \left(u,v+1\right) - I ⁢ \left(u,v-1\right)$ $m \left(u, v\right) = \sqrt{ } ⁢ \left({{f}_{u}}^{2}+{{f}_{v}}^{2}\right)$ $Θ \left(u, v\right) = {tan}^{- 1} \left({f}_{v}/{f}_{u}\right)$

Next, a histogram of the gradient direction is generated with the calculated gradient intensity m and gradient direction Θ. As illustrated in FIG. 10B, the input polarized image is divided into cells each composed of 5*5 pixels, and the gradient direction of 0° to 180° is divided into nine for every 20°. Then, the gradient intensity m of the pixels included in one cell is added to each of the nine gradient directions, and a gradient intensity histogram with nine directions is generated as illustrated in FIG. 10C. As a result, nine-dimensional features (feature vectors) are generated for each cell.

Further, as illustrated in FIG. 10D, multiple blocks of 3*3 cells that shift on one-cell by one-cell basis are set, and the features of each block are combined to form eighty-one dimensional (9*3*3) features. Then, the eighty-one dimensional features are normalized to make the size of vector become one.

Finally, the normalized eighty-one dimensional feature vectors are all combined to obtain the HOG features as illustrated in FIG. 10E. As four blocks can be arranged in the horizontal direction and ten blocks can be arranged in the vertical direction, forty blocks of eighty-one dimensional feature vectors are generated. In other words, the HOG features of higher dimension including three-thousand two-hundred forty dimensional feature vectors are generated.

The HOG features are input to the object recognition unit 32. The object recognition unit 32 recognizes human-figure classes and non-human-figure classes according to the input HOG features. Note that a large amount of features of human-figure classes and non-human-figure classes are given to the object recognition unit 32 in advance, and the object recognition unit 32 is trained to learn what kind of feature corresponds to human-figure classes in the present example embodiment.

In such cases, an area indicating the shape of an object to be recognized is a polarized image in the cells that include the entire polarized image (edges and the inside) of a human figure for learning, and the data indicating unique features of human figure extracted from the area in learning is a certain range of area in the multi-dimensional space of features including a number of feature vectors such as the HOG features. In actual recognition units, certain ranges of area in the multi dimensional space of features including a large number of feature vectors are stored for detecting unique features of human figure, and whether or not an object is a human figure is determined according to the input features.

### <Second Example Embodiment of Image Recognition Unit>

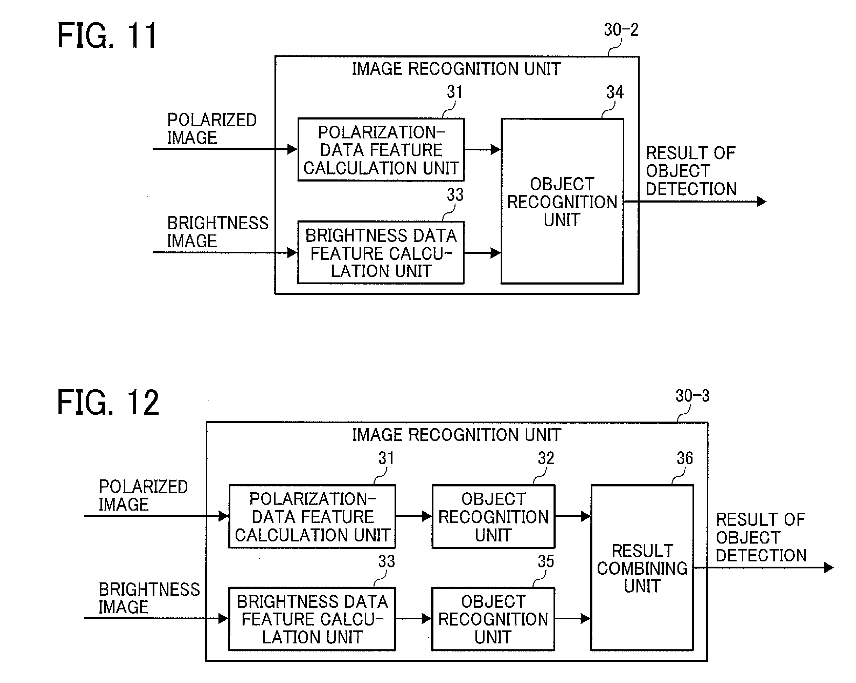

FIG. 11 is a functional block diagram of the image recognition unit 30 illustrated in FIG. 1, according to the second example embodiment. In FIG. 11, like reference signs are given to like elements of FIG. 9. Note that the description of elements similar to those of FIG. 9 will be omitted.

The image recognition unit 30-2 includes the polarization-data feature calculation unit 31 that serves as the first feature obtaining unit, a brightness data feature calculation unit 33 that serves as a second feature obtaining unit, and an object recognition unit 34. The brightness data feature calculation unit 33 obtains a feature from the input brightness image based on differences in brightness (brightness data) between local areas of an area indicating the shape of an object to be recognized such as the HOG features or EOH features of edge components.

To the object recognition unit 34, the features of polarization data calculated by the polarization-data feature calculation unit 31 and the features of brightness data calculated by the brightness data feature calculation unit 33 are input in parallel. The object recognition unit 34 uses known SVM or AdaBoost algorithms to recognize an object from the input features of polarization data and brightness data, and outputs the result of object detection.

Compared with the first example embodiment, the number of dimensions of the input features increases. Accordingly, the performance of detection improves. Moreover, as areas with brightness features are different from areas with polarization features, the performance of recognition can be improved by combining these two kinds of features.

### <Third Example Embodiment of Image Recognition Unit>

FIG. 12 is a functional block diagram of the image recognition unit 30 illustrated in FIG. 1, according to the third example embodiment. In FIG. 11, like reference signs are given to like elements of FIG. 9 and FIGS. 10A to 10E. Note that the description of elements similar to those of FIG. 9 and FIGS. 10A to 10E will be omitted.

The image recognition unit 30-3 includes the polarization-data feature calculation unit 31 that serves as the first feature obtaining unit, the object recognition unit 32, the brightness data feature calculation unit 33 that serves as the second feature obtaining unit, and an object recognition unit 35, and a result combining unit 36.

The object recognition unit 35 uses known SVM or AdaBoost algorithms to recognize an object from the input features of the brightness data, and outputs the result of object detection. In other words, the object recognition unit 32 and the object recognition unit 35 uses the features calculated by the polarization-data feature calculation unit 31 and the features calculated by the brightness data feature calculation unit 33, respectively, to output the result of the object detection.

The result combining unit 36 combines the result of the object detection from the object recognition unit 32 and the result of the object detection from the object recognition unit 35. As the algorithms for combining the results of object detection, for example, AND may be used to determine that an object is detected when both the object recognition unit 32 and the object recognition unit 35 have detected the object, or OR may be used to determine that an object is detected when either of the object recognition unit 32 or the object recognition unit 35 has detected the object.

The image recognition unit 30-3 performs object detection with the polarization data first, and then calculates brightness data features and performs object recognition only at an area where an object is likely to be detected according to the result of the object detection with the polarization data. Accordingly, the computational complexity may be reduced. As a matter of course, the image recognition unit 30-3 may perform object detection with brightness data features first, and then perform object recognition with the polarization data only at an area where an object is likely to be detected.

### <Recognition Examination by Image Recognition Unit>

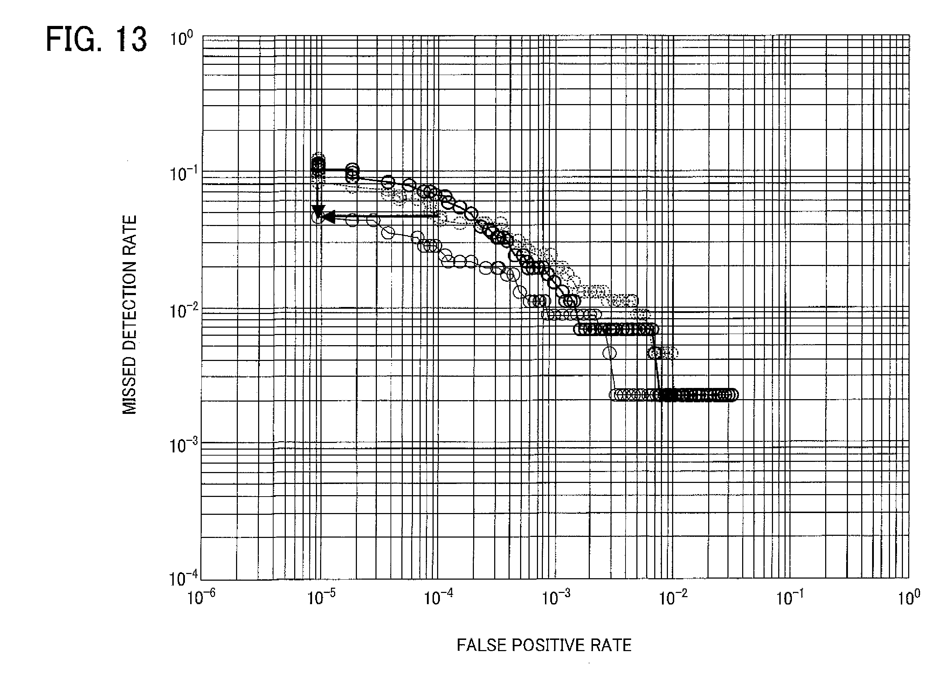

FIG. 13 is a graph illustrating an effect of the image recognition unit 30-1 according to the first example embodiment of the present invention and an effect of the image recognition unit 30-2 according to the second example embodiment of the present invention. Here, the examination results of human-figure detection are indicated where the SDOP is used as polarization data, the HOG features are calculated as polarization-data features, and the SVM is used as an object recognition unit.

The graph of FIG. 13 indicates detection error tradeoff (DET) curves. The missed detection rate of the vertical axis indicates a rate at which no human figure is detected, and the false detection rate of the horizontal axis indicates a rate at which non human figure is detected as a human figure. The graph is a dual logarithmic graph where both the vertical axis and the horizontal axis are logarithmic. By varying the thresholds of the human-figure class and the non-human-figure class at an object recognition unit, the missed detection rate may be compared with the false detection rate. Better performance is indicated at a bottom-left area of the graph.

The broken lines indicate the results when the features of brightness data are used, and the bold solid lines indicate the results when the features of polarization data are used (configuration according to the first example embodiment). Moreover, the thin solid lines indicate the results when the features of brightness data and polarization data are used in parallel (configuration according to the second example embodiment).

If the characteristics of the broken lines are compared with the characteristics of the bold solid lines, it is understood that performance is unchanged or better when recognition is performed with the polarization data only than when recognition is performed with the brightness only. Because the brightness data and the polarization data are independently obtained as described above, the brightness data and the polarization data are complementary to each other. It is to be understood that the false detection rate of human-figure detection at the detection rate of ninety-five percent is reduced from about 1*10-4 to about 1*10-5 by one digit (see arrows in FIG. 13), by simultaneously inputting the brightness data and the polarization data to a recognition unit as separate features.

### <Results of Recognition by Image Recognition Unit>

Next, the results of object recognition performed by the image recognition unit as described above with reference to FIG. 13, upon processing the image that is actually obtained by the imaging device 10, are described.

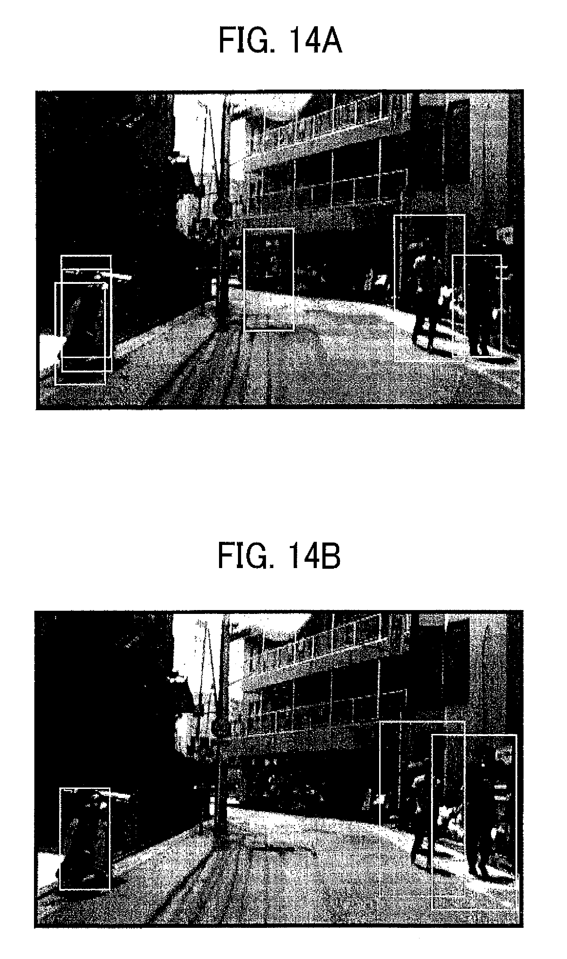

FIG. 14A illustrates the results of recognition performed with a brightness image only, and FIG. 14B illustrates the results of recognition performed with a brightness image and a polarized image according to the example embodiments of the present invention.

In FIGS. 14A and 14B, the frames with white lines indicate the detected areas. In both FIGS. 14A and 14B, the two human figures on the right side of the screen are appropriately detected, but the motorbike on the left side of the screen is detected by error. However, the number of the erroneous detections of the motorbike is smaller in FIG. 14B, where three erroneous detections are present in FIG. 14A and only one erroneous detection is present in FIG. 14B. Moreover, the erroneous detection in the center of the screen is only present in FIG. 14A, and is not present in FIG. 14B. As described above, the erroneous detection of object can greatly be reduced by using the features of polarization data.

In the example embodiment described above, the imaging device 10 obtains a P-polarized component for the pixel that includes the S-polarized component but the P-polarized component, and obtains an S-polarized component for the pixel that includes the P-polarized component but the S-polarized component. However, such obtaining processes of a P-polarized component may be performed by the combination between the imaging device 10 and the brightness-polarized image generation unit 20.

In the example embodiment described above, the brightness-polarized image generation unit 20 generates a brightness image from the average of the S-polarized image and the P-polarized image. However, the generation of such a brightness image may be performed by the imaging device 10. The brightness-polarized image generation unit 20, the image recognition unit 30, and the vehicle controller 40 may be integrated into the imaging device 10.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a CPU, a RAM, and a HDD. The CPU may be implemented by any desired kind of any desired number of processor. The RAM may be implemented by any desired kind of volatile or non-volatile memory. The HDD may be implemented by any desired kind of nonvolatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An image processing device (20, 30) for recognizing an object in a specified imaging area, the device comprising:
a first feature obtaining unit (31) configured to obtain a feature from a polarized image obtained by capturing the imaging area based on a difference in polarization data between local areas of an area indicating the shape of an object to be recognized; and
an object recognition unit (32, 34, 35) configured to recognize the object to be recognized using the feature obtained by the first feature obtaining unit (31).

2. The image processing device (20, 30) according to claim 1, further comprising: a second feature obtaining unit (33) configured to obtain a feature from a brightness image obtained by capturing the imaging area based on a difference in brightness data between local areas of the area indicating the shape of the object to be recognized,
wherein the object recognition unit (32, 34, 35) recognizes the object to be recognized using the feature obtained by the first feature obtaining unit (31) and the feature obtained by the second feature obtaining unit (33).

3. The image processing device (20, 30) according to claim 1, wherein the difference in polarization data between the local areas is a difference in polarization data between adjacent local areas.

4. The image processing device (20, 30) according to claim 1, wherein the difference in polarization data between the local areas is a difference in polarization data between arbitrary pixels.

5. The image processing device (20, 30) according to claim 2, wherein the object recognition unit (32, 34, 35) includes an object recognition unit (34) that recognizes the object to be recognized with reference to both the feature obtained by the first feature obtaining unit (31) and the feature obtained by the second feature obtaining unit (33).

6. The image processing device (20, 30) according to claim 2, wherein the object recognition unit (32, 34, 35) includes two object recognition units (32, 35) that use the feature obtained by the first feature obtaining unit (31) and the feature obtained by the second feature obtaining unit (33), respectively.

7. The image processing device (20, 30) according to claim 1, wherein the polarization data includes at least one of a degree of polarization, sub-degree of polarization, and a polarization ratio.

8. The image processing device (20, 30) according to claim 1, wherein the object recognition unit (32, 34, 35) is further configured to distinguish a class of the object to be recognized from other classes, using a support vector machine or adaptive boosting.

9. The image processing device (20, 30) according to claim 1, wherein the object recognition unit (32, 34, 35) stores data for human-figure detection in a memory.

10. The image processing device (20, 30) according to claim 12, wherein the object recognition unit (32, 34, 35) uses a feature of polarization data that reflects a head area of human figure.

11. The image processing device (20, 30) according to claim 1, wherein the object recognition unit (32, 34, 35) stores data for vehicle detection in the memory.

12. An image processing system (10, 20, 30), comprising:
an imaging device (10) configured to capture the polarized image; and
the image processing device (20, 30) of any one of claims 1 to 11.

13. A mobile object control apparatus (20, 30, 40), comprising:
the image processing device (20, 30) of any one of claims 1 to 11; and
a mobile object controller (40) configured to control a mobile object based on the recognition result output by the image processing device (20, 30).

14. A method of recognizing an object in a specified imaging area performed by the image processing device (20, 30) of any one of claims 1 to 11.

15. A carrier means carrying computer readable code for controlling a computer system (200) to carry out the method of claim 14.
